# EUROPEAN PATENT SPECIFICATION

(11) **EP 0 630 781 B1**
(45) Date of publication and mention of the grant of the patent: **06.09.1995**
(21) Application number: 93110162.0
(22) Date of filing: 25.06.1993
(51) Int. Cl.: B60R 9/04, B60R 9/058

(54) **Carrier apparatus for the transport of articles on the roof of a motor vehicle**
Lastenträgeranordnung zum Transportieren von Gütern auf dem Dach eines Kraftfahrzeuges
Dispositif porte-bagages pour le transport d'objets sur le toit d'un véhicule à moteur

(43) Date of publication of application: 28.12.1994
(73) Proprietor: FAPA S.p.A., I-10092 Beinasco (Torino) (IT)
(72) Inventor: Baravalle, Ugo, I-10123 Torino (IT)
(74) Representative: Marchitelli, Mauro

(56) References cited:
- DE-A- 3 135 649
- DE-A- 3 221 126
- PATENT ABSTRACTS OF JAPAN vol. 10, no. 378 (M-546)17 December 1986 & JP-A-61 171 636 (BRIDGESTONE CORP.) 2 August 1986
- PATENT ABSTRACTS OF JAPAN vol. 12, no. 149 (M-694)10 May 1988 & JP-A-62 268 751 (NICHIREI MAGNET K.K.) 21 November 1987

## Description

The present invention relates to carrier apparatus for the transport of articles on the roof of a motor vehicle, particularly of an all-purpose carrier, ski-carrier or the like type, comprising a support structure having feet for resting on the side edge portions of the roof.

An apparatus of the above type and comprising the features of the first part of claim 1 and 14 is known from DE-A 3 135 649 in which the resting feet are provided with anchoring means for connecting the support structure via a magnetic plate to the side edges of the motor-vehicle roof during use.

Other transport devices are also known which have magnetic anchorages for enabling articles to be carried on a motor-vehicle roof and which can easily be mounted on the roof but these have the disadvantage of a limited load-bearing capacity because of the deformations which the loads themselves produce in the support zone which is substantially central of the roof.

The object of the present invention is to provide and further develop the transport apparatus of the type defined at the beginning of the present description which is particularly convenient and easy to install on the roof of a motor vehicle by the user.

According to the invention, this object is achieved by the features as defined in claims 1 and 14.

By virtue of this characteristic, the apparatus of the invention does not require the resting feet to have associated anchoring means and can be installed particularly simply and quickly by the user and also does not involve a risk of causing deformation to the motor-vehicle roof during use even when the loads transported are relatively large. This transport apparatus may also be removed from the motor-vehicle roof when it is not required for use and can be placed, for example, in the boot so as to occupy little space.

The invention will now be described in detail with reference to the appended drawings, provided purely by way of non-limitative example, in which:
Figure 1 is a perspective view of apparatus according to the present invention associated with the roof of a motor vehicle,
Figure 2 illustrates a variant of Figure 1 in which particular details of the device are shown,
Figure 3 is a partially-sectioned, enlarged side elevational view indicated by the arrow III of Figure 2,
Figure 4 is a perspective view of a variant of Figure 2,
Figure 5 is a front elevational view, partly sectioned along the line V-V of Figure 4, and
Figures 6,7 and 8 are variants of the device of Figure 1.

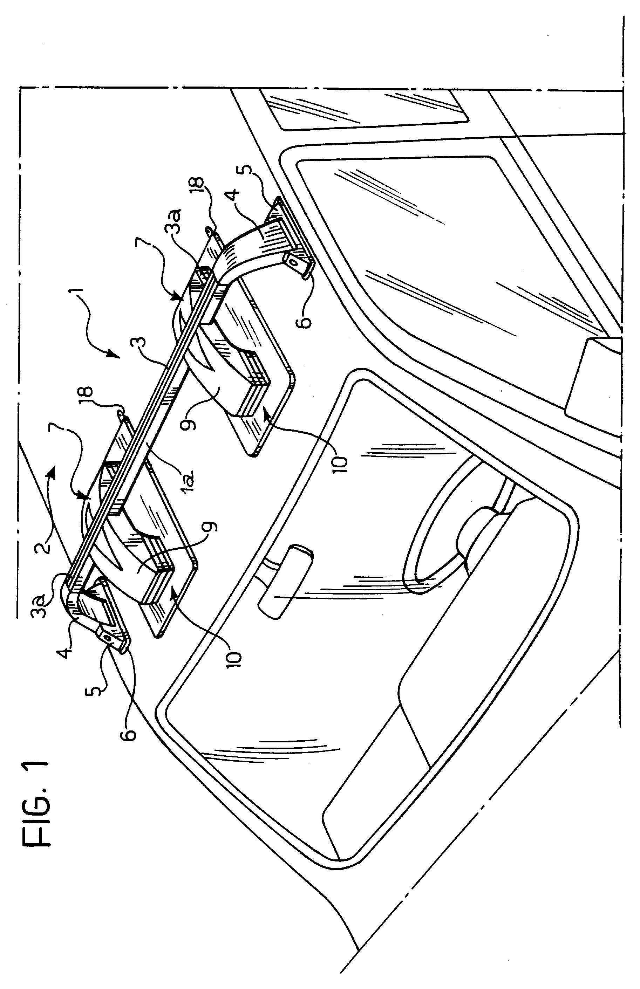

With reference to the drawings, apparatus is generally indicated 1 for the transport of articles on a motor-vehicle roof 2, formed, for example, by a pair of bars 1a (only one of which is shown in Figure 1) disposed parallel to each other and transverse the roof 2. Each bar 1a, which serves as a support structure, comprises a cross-member 3 of telescopically variable length, to the ends 3a of which are rigidly connected feet 4 for resting on the side edge portions of the roof 2. The edges of the roof, which are structurally stronger than the central region of the roof 2, may support even high loads without undergoing appreciable deformation, unlike the central regions of the roof.

The resting feet 4 include respective bases 5 articulated thereto about axes substantially perpendicular to the cross-member 3 so that the bases 5 may adapt themselves perfectly to the curvature of the side edge portions of the roof 2. Each of the bases 5 carries a soft rubber pad 6 beneath it, the lower surface of which, which contacts the roof 2, is formed for example as a suction cup.

A pair of anchoring blocks 7 are located along the cross-member 3 and each comprises a cradle support member (referred to as retaining member in the claims) 8 and an outer fairing 9 shaped so as to improve the aerodynamic properties of the blocks 7.

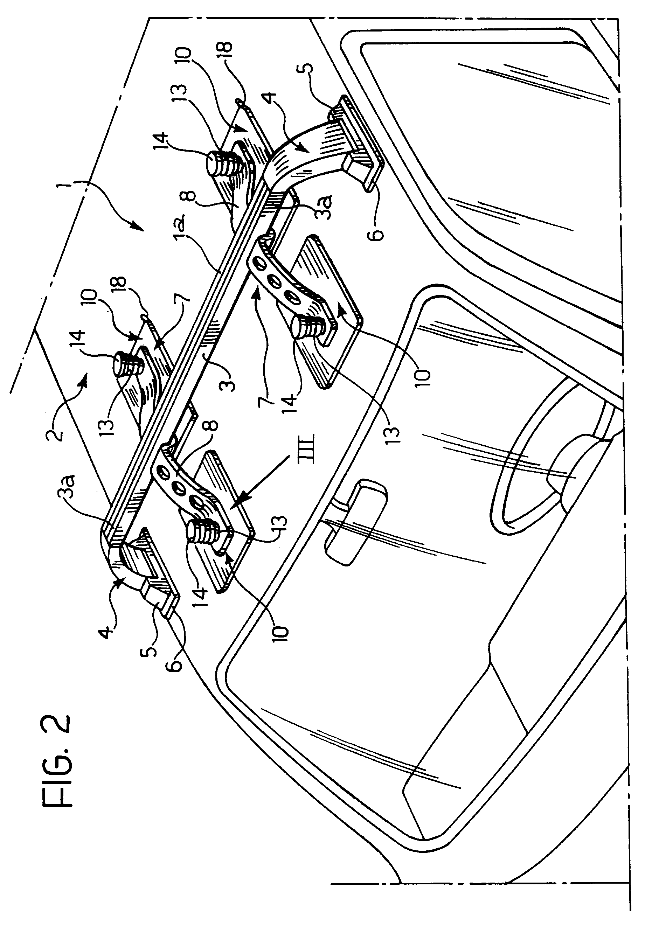

Each block 7, as will be more fully clarified below, is associated therewith one or more magnetic plates 10 of known type. Each block 7 may, for example, be carried by a single plate 10, as illustrated in Figure 1, or by two separate plates 10 located one in front and one to the rear of the cross-member 3 as illustrated in Figure 2.

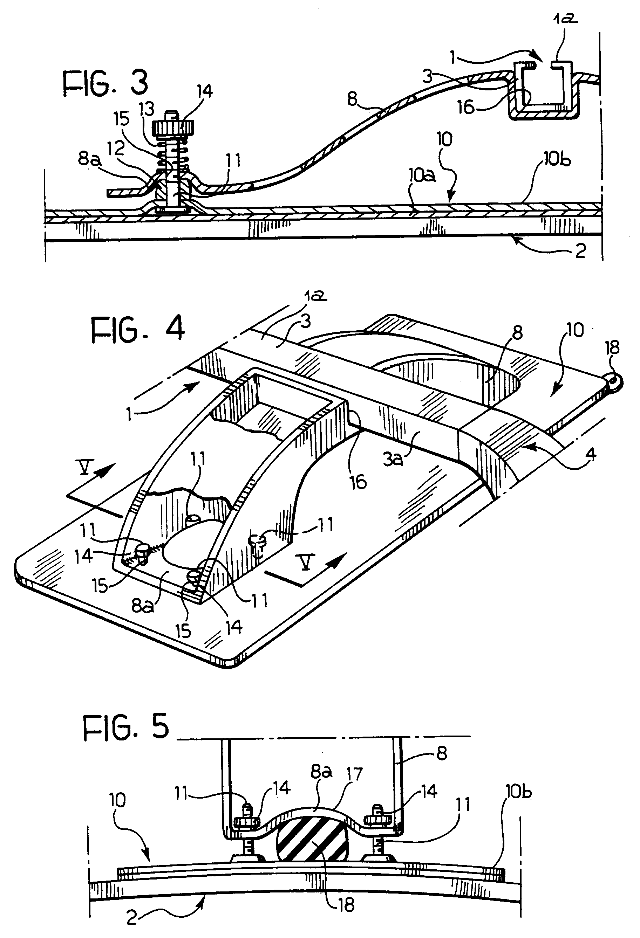

With reference to Figures 2 and 3, in which the blocks 7 are illustrated without their respective fairings 9, each magnetic plate 10 comprises a magnetic sheet 10a, which can be applied directly to the motor-vehicle roof 2 and is shaped to conform thereto, and a flexible metal base sheet 10b, fixed for example by gluing to the upper surface of the magnetic sheet 10a, having a gripper tongue 18 whose function is to facilitate the detachment of the plate 10, and hence of the blocks 7 connected thereto, from the motor-vehicle roof 2.

Each sheet 10b is formed with a hole which receives a screw 11 for connecting a base 8a of a cradle support element 8 to the respective sheet 10b.

Respective toroidal rings 12 of rubber or equivalent material are located coaxially around each of the screws 11 between a respective metal sheet 10b and cradle support 8 to serve as vibration dampers. The screws 11 are inserted in corresponding holes 15 in the bases 8a of each of the cradle supports 8 and are clamped by respective nuts 14 with the interposition of a helical spring 13 so as to provide a resilient connection between the supports 8 and the plates 10.

Preferably each cradle support 8 rests with its bases 8a at two points located on opposite sides of the bar 3 and spaced therefrom so as to give the bar good stability longitudinally of the motor vehicle.

Each cradle support 8 has a seat 16 for receiving a cross-member 3 in an upper central region thereof. Beneath this central region, each cradle support 8 has a clamping device, of a type known per se and hence not illustrated, which enables the cross-member 3 to be connected rigidly to its cradle support member 8. Additional devices of known type (not illustrated) could also be provided for compensating for any misalignment of the two anchoring groups 7 transversely of the roof 2 of the motor vehicle.

Figures 4 and 5 illustrate a variant of the cradle support 8 which, in this case, is formed by a box member whose two bases 8a have four holes 15 each engaged by a respective screw 11 clamped by a nut 14 and between which is formed a substantially dome-shaped projection 17. This dome-shaped projection 17 forms a seat for receiving a bearing 18 of elastomeric material, interposed between a sheet 10b and a base 8a, to serve as a vibration damper.

By virtue of this arrangement, the weight of the load supported by the bar is discharged almost entirely through the resting feet 4 of each of the cross-members 3 so as to avoid causing any deformation to the motor-vehicle roof 2, while the anchoring of the bar to the roof 2 is ensured by the groups 7.

The vibration damping supports which connect each of the bases 8a of the cradle support member 8 to the respective plate 10 prevent vibrations from being transmitted from the cross-member 3 to the roof 2.

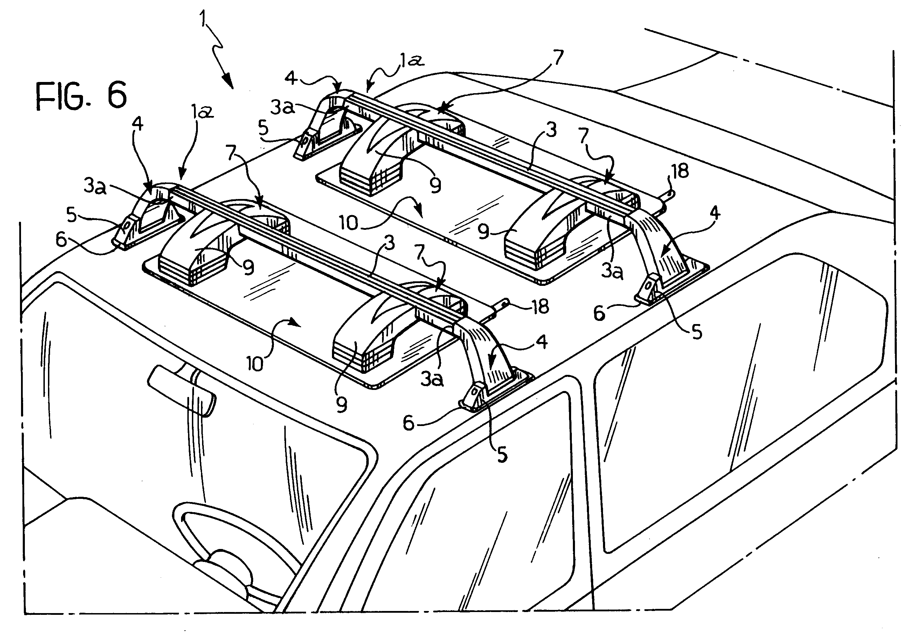

Various arrangements of the anchoring units 7 relative to the magnetic plates 10 are also possible. For example, a single anchoring unit 7 could be used for each cross-member 3, it being located substantially centrally of the cross-member 3, or several units 7 could be disposed in parallel on a single magnetic plate 10 extending transverse the motor-vehicle roof 2 according to the configuration illustrated in Figure 6.

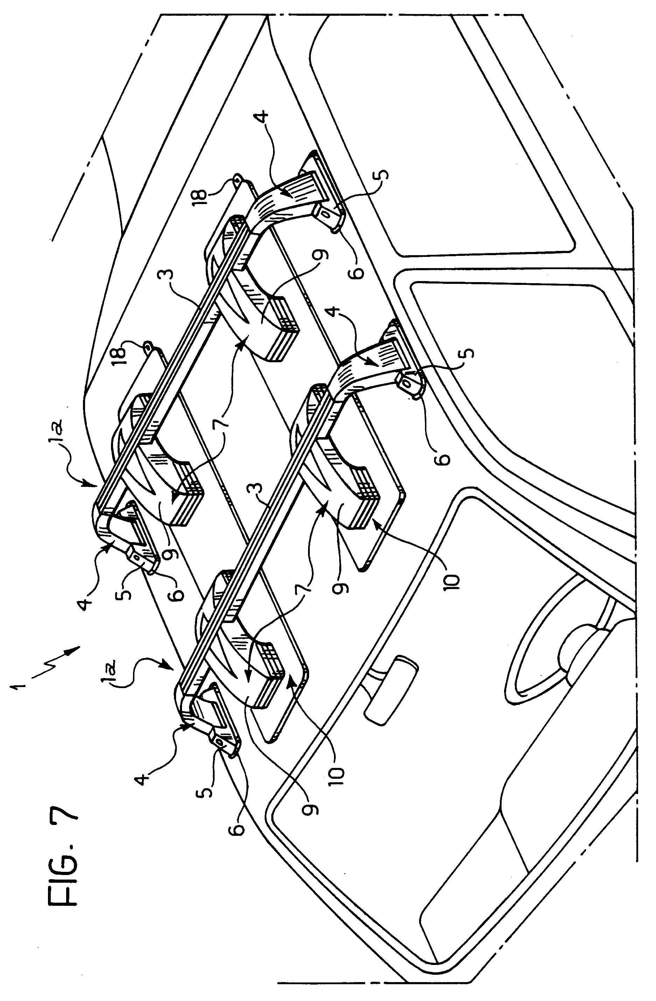

Alternatively a pair of anchoring units 7 could be disposed in longitudinal alignment on a pair of plates 10 disposed parallel to each other and extending longitudinally of the motor-vehicle roof 2 so that each anchoring group 7 supports a different cross-member 3, according to the configuration illustrated in Figure 7.

The installation of the bars 1a requires the initial positioning of the plates 10 with their units 7 on the motor-vehicle roof 2 and then the insertion of the cross-members 3 in their respective seats 16 in the cradle support member 8. The tightening of the devices for clamping the cross-members 3 to the blocks 7 completes the anchoring of the cross-members 3 to the roof 2.

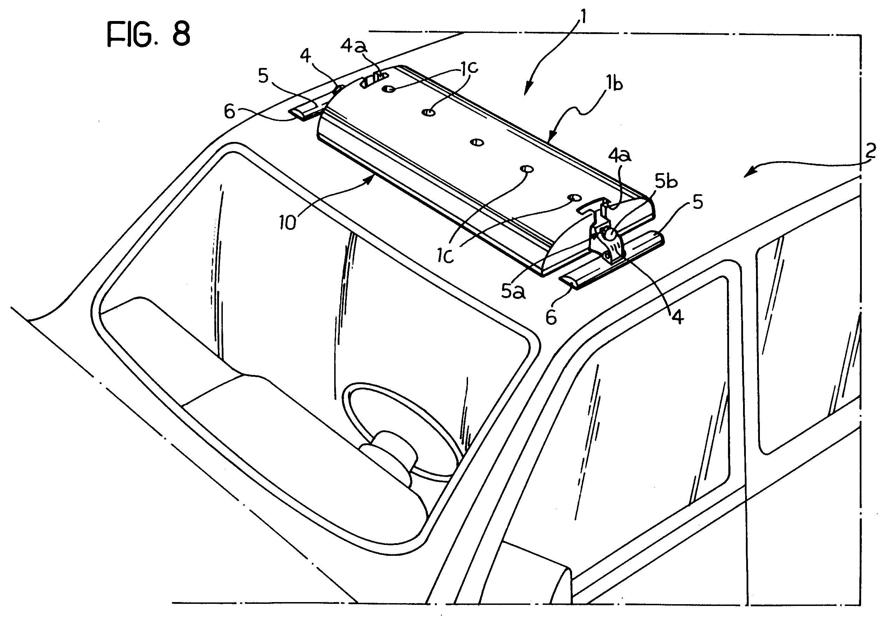

In a variant of the invention illustrated in Figure 8, the apparatus 1 preferably includes a pair of elongate bodies 1b of half-shell or bell shape (only one of which is visible in Figure 8) both anchored magnetically by means of a respective plate 10 to the roof 2 with the interposition of at least one cradle support member 8 between the plate 10 and the respective body 1b. Each body 1b has lateral resting feet 4 with articulated bases 5 adapted to bear on the side edge portions of the roof 2. The height of the feet 4 relative to the body 1b may be adjusted when this is applied to the roof 2 by sliding along guide channels 4a formed in two opposite side faces of the body 1b so as to enable the bases 5 to fit perfectly on the surface of the roof 2. Clamping means 5a, for example constituted by a threaded shank with an outer operating knob 5b, pass through part of each foot 4, in correspondence with the respective channel 4a, so as to enable them to be clamped with one end against the body 1b and thus prevent the feet 4 from moving relative to the body 1b. The upper surface of each body 1b has retaining means of known type, for example constituted by holes 1c, for allowing the fixing of accessories such as ski-clamps or clamp members of various types.

The present variant enables the height, in particular, of the transport apparatus to be reduced considerably and enables the load carried by the apparatus to be brought closer to the roof 2 so as to minimise its overall frontal surface, all to the advantage of reducing the aerodynamic resistance of the apparatus during movement of the motor vehicle to which it is fitted.

In order to fix this variant of the transport apparatus to the roof 2, it will thus suffice to place, for example, a pair of the bodies 1b on two regions of the roof 2 and to adjust the height of the feet 4, these being clamped by the clamping means 5a by the screwing of the threaded shanks by means of their respective operating knobs 5b in the positions in which the bases 5 bear against the surface of the roof.

Naturally, the scope of the present invention extends to models which achieve equal utility by using the same innovative concept. For example, the anchoring blocks 7 may be connected releasably to the cross-members 3 or may be connected permanently thereto.

## Claims

1. Carrier apparatus for the transport of articles on the roof (2) of a motor vehicle, particularly of an all-purpose carrier, ski-carrier or the like type, comprising a support structure (1a;1b) having feet (4,5) for resting on the side edge portions of the roof (2), and at least one associated magnetic plate (10);
characterised in that the at least one associated magnetic plate (10) is arranged separately from the resting feet at the support structure (1a;1b) which magnetic plate is applied to the roof (2) to retain the carrier apparatus (1) thereon substantially without transmitting the load of the articles carried by the support structure (1a;1b) to the roof (2), the load transmission being entrusted substantially only to the resting feet (4,5).

2. Apparatus according to Claim 1, characterised in that the resting feet (4) have respective bases (5) articulated about axes substantially perpendicular to the support structure (1a;1b).

3. Apparatus according to Claim 2, characterised in that the or each magnetic plate (10) has at least one associated retaining member (8) for attaching it to the support structure (1a;1b).

4. Apparatus according to Claim 2, characterised in that the support structure is a bar (1a) comprising a cross-member (3).

5. Apparatus according to Claim 2, characterised in that the support structure is a body (1b) shaped substantially as a half-shell.

6. Apparatus according to Claim 5, characterised in that it includes adjustment means (4a,5a) for adjusting the height of the resting feet (4) relative to the body (1b).

7. Apparatus according to Claim 5, characterised in that the body (1b) includes means (1c) for retaining articles to be transported.

8. Apparatus according to Claim 3 and 4 or 5, characterised in that the or each retaining member (8) is connected resiliently to the magnetic plate (10).

9. Apparatus according to Claim 3 and 4, characterised in that the or each retaining member (8) is connected permanently to the cross-member (3).

10. Apparatus according to Claim 3 and 4, characterised in that the or each retaining member (8) is connected releasably to the cross-member (3).

11. Apparatus according to Claim 3 and 4, characterised in that each retaining member (8) is connected to the magnetic plate (10) at at least two points on opposite sides of the cross-member (3).

12. Apparatus according to Claim 3 and 4, characterised in that the or each magnetic plate (10) has an associated pair of retaining members (8) intended to be located side-by-side along the cross-member (3).

13. Apparatus according to Claim 4, characterised in that each cross-member (3) has an associated pair of magnetic plates (10).

14. A unit for the transport of articles on the roof (2) of a motor-vehicle, particularly an all-purpose carrier, ski-carrier or the like, including at least two support structures (1a;1b) each of which includes at least one magnetic plate (10) and resting feet (4,5) for bearing on the side edge portions of the roof (2), characterised in that each of the support structures (1a;1b) is retained on the roof (2) by means of said magnetic plate (10) which is arranged separately from the resting feet (4,5) at the support structures (1a;1b) while the load of the articles transported by the support structures (1a;1b) is transmitted to the roof (2) substantially only through the resting feet (4,5).

## Patentansprüche

1. Tragvorrichtung für den Transport von Gegenständen auf dem Dach (2) eines Kraftfahrzeuges, insbesondere Mehrzweckträger, Schiträger oder dergleichen, umfassend eine Stützkonstruktion (1a; 1b) mit Füßen (4, 5) für die Auflage auf den seitlichen Randbereichen des Daches (2) und mindestens eine dazugehörige magnetische Platte (10), dadurch gekennzeichnet, daß die mindestens eine dazugehörige magnetische Platte (10) getrennt von den Rastfüßen an der Stützkonstruktion (1a; 1b) angeordnet ist, wobei diese magnetische Platte am Dach (2) angebracht ist, um die Tragvorrichtung (1) auf diesem zu halten, im wesentlichen ohne das Gewicht der von der Stützkonstruktion (1a; 1b) getragenen Gegenstände auf das Dach (2) zu übertragen, und die Gewichtsübertragung im wesentlichen nur durch die Rastfüße (4, 5) erfolgt.

2. Vorrichtung nach Anspruch 1, dadurch gekennzeichnet, daß die Rastfüße (4) jeweils Sockelteile (5) haben, die gelenkig um Achsen im wesentlichen senkrecht zur Stützkonstruktion (1a; 1b) gelagert sind.

3. Vorrichtung nach Anspruch 2, dadurch gekennzeichnet, daß die oder jede magnetische Platte (10) mindestens ein dazugehöriges Halteelement (8) zu ihrer Befestigung an der Stützkonstruktion (1a; 1b) hat.

4. Vorrichtung nach Anspruch 2, dadurch gekennzeichnet, daß die Stützkonstruktion eine Stange (1a) umfassend einen Querträger (3) ist.

5. Vorrichtung nach Anspruch 2, dadurch gekennzeichnet, daß die Stützkonstruktion ein im wesentlichen halbschalenförmiger Körper (1b) ist.

6. Vorrichtung nach Anspruch 5, dadurch gekennzeichnet, daß sie Einstellmittel (4a, 5a) zur Einstellung der Höhe der Rastfüße (4) relativ zum Körper (1b) aufweist.

7. Vorrichtung nach Anspruch 5, dadurch gekennzeichnet, daß der Körper (1b) Mittel (1c) zum Festhalten von zu transportierenden Gegenständen aufweist.

8. Vorrichtung nach Anspruch 3 und 4 oder 5, dadurch gekennzeichnet, daß das oder jedes Halteelement (8) elastisch mit der magnetischen Platte (10) verbunden ist.

9. Vorrichtung nach Anspruch 3 und 4, dadurch gekennzeichnet, daß das oder jedes Halteelement (8) fix mit dem Querträger (3) verbunden ist.

10. Vorrichtung nach Anspruch 3 und 4, dadurch gekennzeichnet, daß das oder jedes Halteelement (8) lösbar mit dem Querträger (3) verbunden ist.

11. Vorrichtung nach Anspruch 3 und 4, dadurch gekennzeichnet, daß jedes Halteelement (8) mit der magnetischen Platte (10) an mindestens zwei Stellen auf gegenüberliegenden Seiten des Querträgers (3) verbunden ist.

12. Vorrichtung nach Anspruch 3 und 4, dadurch gekennzeichnet, daß die oder jede magnetische Platte (10) ein dazugehöriges Paar Halteelemente (8) hat, die am Querträger (3) nebeneinander anordenbar sind.

13. Vorrichtung nach Anspruch 4, dadurch gekennzeichnet, daß jeder Querträger (3) ein dazugerhöriges Paar magnetische Platten (10) aufweist.

14. Einheit für den Transport von Gegenständen auf dem Dach (2) eines Kraftfahrzeuges, insbesondere Mehrzweckträger, Schiträger oder dergleichen, umfassend mindestens zwei Stützkonstruktionen (1a; 1b), wobei jede mindestens eine magnetische Platte (10) und Rastfüße (4, 5) aufweist, die auf den seitlichen Randbereichen des Daches (2) aufliegen, dadurch gekennzeichnet, daß jede Stützkonstruktion (1a; 1b) mit Hilfe der magnetischen Platte (10), die an den Stützkonstruktionen (1a; 1b) getrennt von den Rastfüßen (4, 5) angeordnet ist, auf dem Dach (2) festgehalten ist, während das Gewicht der von den Stützkonstruktionen (1a; 1b) transportierten Gegenstände im wesentlichen nur durch die Rastfüße (4, 5) auf das Dach (2) übertragen wird.

## Revendications

1. Dispositif porte-bagages pour le transport d'objets sur le toit (2) d'un véhicule à moteur, en particulier un porte-bagages multi-usage, porte-skis ou de type similaire, comprenant une structure de support (1a; 1b) ayant des pattes (4, 5) pour s'appuyer sur les parties de bord latéral du toit (2) et au moins une plaque magnétique (10) associée ;
caractérisé en ce que au moins la plaque magnétique associée (10) est disposée de manière séparée des pattes d'appui sur la structure de support (1a; 1b), la plaque magnétique est placée sur le toit (2) pour maintenir le dispositif de transport (1) sur celui-ci sans transmettre sensiblement la charge des objets portés par la structure de support (1a; 1b) au toit (2), la charge étant sensiblement transmise uniquement aux pattes d'appui (4, 5).

2. Dispositif selon la revendication 1, caractérisé en ce que les pattes d'appui (4) ont des embases respectives (5) articulées autour d'axes sensiblement perpendiculaires à la structure de support (1a; 1b).

3. Dispositif selon la revendication 2, caractérisé en ce que la plaque magnétique ou chacune des plaques magnétiques (10) comporte au moins un élément de maintien (8) associé pour la fixer à la structure de support (1a; 1b).

4. Dispositif selon la revendication 2, caractérisé en ce que la structure de support est une barre (1a) comprenant un élément transversal (3).

5. Dispositif selon la revendication 2, caractérisé en ce que la structure de support est un corps (1b) formé sensiblement en demi-coque.

6. Dispositif selon la revendication 5, caractérisé en ce qu'il comprend un moyen de réglage (4a, 5a) destiné à régler la hauteur des pattes d'appui (4) par rapport au corps (1b).

7. Dispositif selon la revendication 5, caractérisé en ce que le corps (1b) comprend un moyen (1c) destiné à maintenir les objets devant être transportés.

8. Dispositif selon les revendications 3 et 4, ou 5, caractérisé en ce que le ou chaque élément de maintien (8) est connecté de manière élastique à la plaque magnétique (10).

9. Dispositif selon les revendications 3 et 4, caractérisé en ce que le ou chaque élément de maintien (8) est connecté en permanence à l'élément transversal (3).

10. Dispositif selon les revendications 3 et 4, caractérisé en ce que le ou chaque élément de maintien (8) est connecté de façon amovible à l'élément transversal (3).

11. Dispositif selon les revendications 3 et 4, caractérisé en ce que chaque élément de maintien (8) est connecté à la plaque magnétique (10) en au moins deux points sur les côtés opposés de l'élément transversal (3).

12. Dispositif selon les revendications 3 et 4, caractérisé en ce que la ou chaque plaque magnétique (10) est associée à une paire d'éléments de maintien (8) ayant pour objet d'être placés côte à côte le long de l'élément transversal (3).

13. Dispositif selon la revendication 4, caractérisé en ce que chaque élément transversal (3) est associé à une paire de plaques magnétiques (10).

14. Ensemble pour le transport d'objets sur le toit (2) d'un véhicule à moteur, en particulier un porte-bagages multi-usage, porte-skis ou de type similaire, comprenant au moins deux structures de support (1a; 1b) dont chacune comprend au moins une plaque magnétique (10) et des pattes d'appui (4,5) pour être en portée sur les parties de bord latéral du toit (2), caractérisé en ce que chacune des structures de support (1a; 1b) est maintenue sur le toit (2) au moyen de ladite plaque magnétique (10) qui est disposée de manière séparée des pattes d'appui (4, 5) sur les structures de support (1a; 1b) alors que la charge des objets transportés par les structures de support (1a; 1b) est sensiblement transmise au toit (2) uniquement par les pattes d'appui (4, 5).
